# EUROPÄISCHE PATENTSCHRIFT

(11) **EP 2 023 031 B1**
(45) Veröffentlichungstag und Bekanntmachung des Hinweises auf die Patenterteilung: **29.04.2015**
(21) Anmeldenummer: 08161424.0
(22) Anmeldetag: 30.07.2008
(51) Int. Cl.: F16L 55/13, F16J 13/00

(54) **Verfahren zum druckdichten Verschließen einer Bohrung, sowie Druckgehäuse**
Method for pressurised sealing of a drill hole and pressure housing
Procédé de fermeture étanche à la pression d'un trou de forage et boîtier sous pression

(30) Priorität: 10.08.2007 AT 12602007
(43) Veröffentlichungstag der Anmeldung: 11.02.2009
(73) Patentinhaber: Hoerbiger Automotive Komfortsysteme GmbH, 86956 Schongau (DE)
(72) Erfinder: Kainzmeier, Herbert, 86972 Altenstadt (DE)
(74) Vertreter: Grättinger Möhring von Poschinger Patentanwälte Partnerschaft

(56) Entgegenhaltungen:
- EP-A- 0 364 699
- EP-A1- 0 928 655
- DE-A1- 4 142 153
- DE-A1- 4 343 585
- DE-C- 538 132
- GB-A- 1 357 796
- US-A- 3 560 030

## Beschreibung

Die Erfindung betrifft ein Verfahren zum druckdichten Verschließen einer Bohrung in Gehäusen, umfassend das Einlassen eines im Wesentlichen büchsenförmigen, einteiligen Stopfens in die Bohrung des Gehäuses, wobei ausschließlich der Stopfen mittels eines axialen Werkzeuges plastisch verformt wird, so dass der Stopfen über zumindest einen Teil seiner Länge radial nach außen hin verformt und damit in dichtende Verbindung mit der Innenwandung der Bohrung gebracht wird, wobei vor Einsetzen des Stopfens eine umlaufende Nut und/oder Hinterschneidung in der Bohrung ausgearbeitet wird, und das Material des Stopfens unter dauerhafter Umformung im Wesentlichen radial in diese Nut bzw. hinter diese Hinterschneidung gedrückt wird. Weiterhin betrifft die Erfindung ein Druckgehäuse mit zumindest einer Bohrung, welche durch einen darin eingesetzten, im Wesentlichen buchsenförmigen, einteiligen Stopfen druckdicht verschlossen ist, wobei der Stopfen durch plastische Verformung eine zumindest teilweise formschlüssige Verbindung mit der Innenwandung der Bohrung eingegangen ist, in der Innenwandung der Bohrung gehalten ist, wobei in der Bohrung eine umlaufende Nut und/oder Hinterschneidung vorgesehen ist, in welche Nut der durch Umformung dauerhaft in seiner Form veränderte Stopfen mit einer umlaufenden Auskragung eingreift bzw. welche Hinterschneidung die umlaufende Auskragung des Stopfens hintergreift.

Um Bohrungen in Druckgehäusen, beispielsweise in Pumpenträgern oder Steuerblöcken von hydraulischen Systemen, zu verschließen, ist es bei kleineren Durchmessern üblich Kugeln durch ein Werkzeug in die Bohrung des Gehäuses einzudrücken, die nachträglich durch Verpressen gesichert werden. Diese mit Umformung des Materials des Gehäuses verbundene Methode ist für Bohrungen bzw. Kugeln bis zu einem Durchmesser von ca. 6 mm üblich und wirtschaftlich machbar. Für größere Durchmesser werden Verschlussschrauben mit Dichtringen in den Körper geschraubt. Durch den Schraubvorgang können metallische Partikel in das Hydrauliksystem eingebracht werden, was zu Störungen und erhöhtem Wartungs- oder Wiederherstellungsaufwand führen kann.

Bekannt sind aber auch aus mehreren Teilen bestehende Dichtstopfen, auch für größere Durchmesser, welche jedoch einen größeren Bauraum einnehmen, aufwendiger und auch teurer sind. So verwendet beispielsweise das System gemäß der EP 364 699 A1 einen büchsenförmigen Stopfen, der mittels einer darin eingepressten Kugel radial aufgeweitet und damit in der Bohrung fixiert wird, wobei die Kugel im Stopfen verbleibt. Ähnlich dazu sieht die EP 443 720 A2 ein konisches Spreizelement für den Stopfen vor, welches ebenfalls im Stopfen verbleibt. Auch die GB 1357796A offenbart einen zweiteiligen Dichtstopfen mit einem büchsenförmigen Dichtelement und einer darin aufgenommenen Kugel, welche in die Dichtbüchse in Richtung auf deren Boden gepresst wird, um für einen dichten Sitz der Wand der Dichtbüchse an der Bohrung zu sorgen. Der Boden kann dabei nach innen konisch ausgeführt sein, wobei die Kugel gegen die Konusspitze gedrückt wird und den Boden hierdurch gegen die Bohrung spreizt.

Die EP 928655 A1 offenbart einen büchsenförmigen Dichtstopfen, dessen Wand - insbesondere durch Druckbeaufschlagung - nach außen zur dichten Anlage an einer profilierten Bohrung eines Gussteils verformt wird. Der Dichtstopfen besteht dabei zumindest im Wesentlichen aus dem gleichen Material wie das Gussteil, um eine gemeinsame Entsorgung durch Recycling zu ermöglichen.

Das Dokument DE-A-4343585 offenbart ein Verfahren, wobei vor Einsetzen des Stopfens eine umlaufende Nut (10b) in der Bohrung (2) ausgearbeitet wird, und das Material des Stopfens (14) unter dauerhafter Umformung radial in diese Nut aufgespreizt wird.

Im Lichte des vorstehend dargelegten Standes der Technik ist es Aufgabe der vorliegenden Erfindung, ein Verfahren zum druckdichten Verschließen einer Bohrung in Gehäusen der eingangs angegebenen Art sowie ein Druckgehäuse der ebenfalls eingangs angegebenen Art bereitzustellen, die bei verbesserter wirtschaftlicher Fertigung ein sicheres, druckdichtes Verschließen von Bohrungen mit einem möglichst geringen Bauraum einnehmenden System ermöglichen.

Die Lösung dieser Aufgabe erfolgt durch das Verfahren nach Anspruch 1 bzw. das Druckgehäuse nach Anspruch 7. Demgemäß ist für die Erfindung u.a. wesentlich, dass vor Einsetzen des Stopfens eine umlaufende Nut oder/oder Hinterschneidung in der Bohrung ausgearbeitet wird, und das Material des Stopfens im wesentlichen radial in diese Nut bzw. hinter diese Hinterschneidung gedrückt wird. Damit kann durch Verwendung eines weichen Materials für den Stopfen im Vergleich mit jenem der Bohrung in einfacher Weise eine hochdruckfeste und sichere Abdicht- und Schließwirkung erzielt werden. Durch die vorherige Ausarbeitung einer Nut oder Hinterschneidung kann einerseits ein gut umformbares, weiches Material (im Vergleich mit jenem der Bohrung) für den Stopfen verwendet und eine unerwünschte Verformung der Bohrung vermieden werden.

Gemäß einer vorteilhaften Variante des Verfahrens ist vorgesehen, dass die Bohrung eine im wesentlichen schulterartige Querschnittsverengung auf einen geringeren Durchmesser als den Außendurchmesser des Stopfens aufweist, wobei der Stopfen vor seiner radialen Verformung an dieser Querschnittsverengung anliegt. Durch diesen Anschlag für den Stopfen wird die Umformung des Stopfens im Bereich der Innenwandung der Bohrung genau definiert als auch eine genaue und sichere Positionierung gewährleistet.

Alternativ dazu kann auch ein entfernbarer Anschlag für den Stopfen in die Bohrung eingebracht, der Stopfen auf diesen Anschlag aufgesetzt und anschließend mittels des Werkzeuges entlang der dem Stopfen zugewandten Oberfläche des Anschlages auf die Nut bzw. die Hinterscheidung der Bohrung hin verformt werden. Auch damit können eine sichere Positionierung und die genau definierte Umformung des Stopfens sichergestellt werden.

Wenn gemäß einer weiteren Variante ein im wesentlichen scheibenförmiger Anschlagteil mit größerer Härte als der Stopfen in die Bohrung eingesetzt und an die Querschnittsverengung angesetzt wird, wonach der Stopfen auf den Anschlagteil angesetzt und ein Teil des Materials des Stopfens entlang der Oberfläche des Anschlagteils im wesentlichen radial in die Nut bzw. hinter die Hinterschneidung gedrückt wird, kann trotz eines weichen und damit einfach und wirtschaftlich bearbeitbaren Stopfens für innerhalb der Bohrung bewegliche Teile ein Anschlag realisiert werden, ohne eine Beschädigung des Stopfens und Dichtheitsverlust befürchten zu müssen.

Besonders vorteilhaft und wirtschaftlich ist ein Verfahren, bei welchem der Stopfen durch Kaltumformung hergestellt wird.

Wenn zur Umformung des Stopfens das Werkzeug mittels eines im wesentlichen zylindrischen Abschnittes auf den Boden des im wesentlichen büchsenförmigen Stopfens einwirkt, ist eine einfache Werkzeugform sichergestellt, die allenfalls auch den Stopfen durch vorheriges Aufsetzen auf das Werkzeug in die Bohrung einbringen kann.

Eine gute zentrierende Wirkung betreffend der Kraftverteilung entlang des Umfanges des Stopfens bzw. der Bohrung kann dadurch erzielt werden, dass das Werkzeug mittels eines im wesentlichen kugelförmigen Abschnittes auf den Mantelbereich des Stopfens einwirkt.

Ein eingangs beschriebenes Druckgehäuse ist gemäß der vorliegenden Erfindung dadurch gekennzeichnet, daß in der Bohrung eine umlaufende Nut und/oder Hinterschneidung vorgesehen ist, in welche der Stopfen mit einer umlaufenden Auskragung eingreift bzw. welche diese umlaufende Auskragung des Stopfens hintergreift. Damit ist eine genau definierte und sichere Verbindung und Dichtwirkung zwischen Gehäuse und Stopfen sichergestellt, genauso wie die Vermeidung einer unerwünschten Verformung des Gehäuses im Bereich der Bohrung. Damit können auch Funktionsbohrungen näher an die zu verschließende Bohrung gelegt werden, so dass sich insgesamt eine geringere Baugröße realisieren lässt.

Dieser Vorteil wird noch erhöht, wenn gemäß einer vorteilhafte Ausführungsform der Stopfen an einer im wesentlichen schulterartigen, umlaufenden Querschnittsverengung der Bohrung anliegt.

Aufgrund der Nut bzw. Hinterschneidung und des damit geschaffenen Freiraumes für das Material des Stopfens, in welches dieses Material während der Umformung einfach und ohne großen Widerstand eintreten kann, kann eine vorteilhafte weitere Ausführungsform der Erfindung vorsehen, dass der Stopfen aus einem weicheren Material als das Gehäuse, zumindest im Bereich der Bohrung, besteht.

Falls während der Umformung ein Gegen- oder Unterwerkzeug verwendet wird, kann gemäß einer alternativen Ausführungsform aber auch der Stopfen aus einem härteren Material als das Gehäuse, zumindest im Bereich der Bohrung, bestehen.

Wenn gemäß einem weiteren optionalen Merkmal der Erfindung zusätzlich ein im wesentlichen scheibenförmiger Anschlagteil zwischen dem Stopfen und der schulterartigen Querschnittsverengung vorgesehen ist, wobei der Stopfen an dem Anschlagteil zumindest teilweise anliegt und allein das Material des Stopfens in die in der Bohrung umlaufende Nut eingreift bzw. die Hinterschneidung der Bohrung hintergreift, ist damit ein sicherer und die Dichtwirkung nicht beeinflussender Anschlag für Funktionsteile im Druckgehäuse gebildet. Überdies gibt der scheibenförmige Anschlagteil die endgültige Form des Stopfens und eine Fließrichtung für das Material während der Umformung vor.

Vorteilhafterweise ist eine wirtschaftliche und in der Herstellung einfache Ausführungsform gegeben, wenn der Stopfen durch Kaltumformung in seine die Bohrung verschließende Form gebracht worden ist.

In der nachfolgenden Beschreibung soll die Erfindung anhand einiger, in den beigefügten Zeichnungen dargestellter Ausführungsbeispiele näher erläutert werden.

Dabei zeigt die Fig. 1 ein Druckgehäuse im Bereich der Bohrung und einen Stopfen gemäß einer ersten Ausführungsform zusammen mit dem Umformwerkzeug vor Beginn des Umformvorganges, Fig. 2 ist eine Darstellung der ersten Ausführungsform in fertigem Zustand der verschlossenen Bohrung, und Fig. 3 zeigt eine zweite Ausführungsform von Bohrung und Stopfen mit zusätzlichem Anschlagteil, ebenfalls vor Beginn des Umformvorganges.

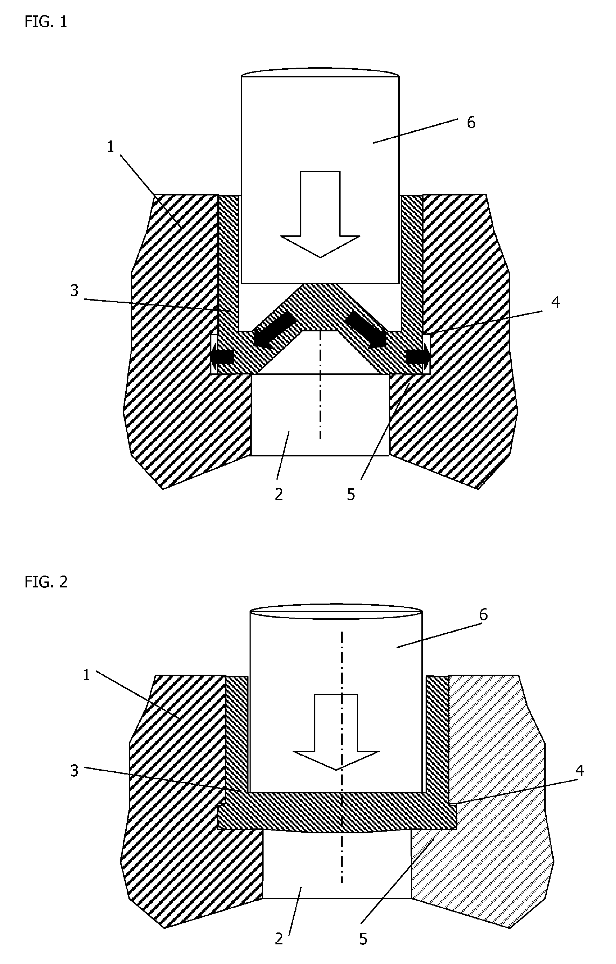

In einem Druckgehäuse 1, beispielsweise einem Pumpenträger oder einem Steuerblock von hydraulischen Systemen, wie sie etwa für Cabrioverdecke, Heckdeckelbetätigungen oder dgl. Anwendung finden, ist - wie in Fig. 1 schematisch dargestellt - eine Bohrung 2 ausgearbeitet, welche durch einen Stopfen 3 dicht verschlossen werden soll. Zweckmäßigerweise ist dazu in der Innenwandung der Bohrung 2 eine umlaufende Nut 4 ausgearbeitet. Anstelle der Nut könnten auch einzelne Ausnehmungen in der Innenwandung der Bohrung 2 vorgesehen sein. Vorteilhafterweise kann auch eine Querschnittsverengung der Bohrung 2 vorhanden sein, durch welche eine vorzugsweise umlaufende Schulter 5 gebildet ist. Der Stopfen 3 wird bis zu einem allenfalls entfernbaren Anschlag, Unterwerkzeug od. dgl. bzw. bis zum Anliegen an der Schulter 5 in die Bohrung 2 eingeführt, was beispielsweise durch den vorderen, im wesentlichen zylindrischen Abschnitt 6 des Umformwerkzeuges bewerkstelligt werden kann, auf welchen Abschnitt 6 ein vorzugsweise im wesentlichen büchsenförmiger Stopfen 3 vor dem Einsetzen in die Bohrung 2 aufgesetzt worden ist. Sobald der Stopfen 3 am Anschlag oder der Schulter 5 anliegt, beginnt beim weiteren Arbeitshub des Werkzeuges die Umformung des Stopfens 3. Bei Verwendung eines weichen Materials für den Stopfen 3, vorzugsweise weicher als das Gehäuse 1 im Bereich der Bohrung 2, kann dies vorteilhafterweise durch Kaltumformung geschehen. Vorzugsweise ist der Boden des Stopfens 3 in Richtung des Werkzeuges hin bombiert oder in Form eines Kegels bzw. Kegelstumpfes ausgebildet. Auch als einfaches und wirtschaftliches Herstellungsverfahren für den Stopfen 3 kommt vorteilhafterweise Kaltumformung zum Einsatz.

Wie durch die Pfeile angedeutet ist, drückt der vordere Abschnitt 6 des Werkzeuges bei fortgesetzter axialer Bewegung das Material des Bodens des Stopfens 3 nach vorne und auch radial nach außen hin, so dass sich am vorderen Ende des Stopfens 3, auf der dem Werkzeug gegenüberliegenden Seite, unter Umfangsvergrößerung eine radiale Auskragung ausbildet, in dem Material des Stopfens 3 in die umlaufende Nut 4 oder die allfälligen anders gestalteten Ausnehmungen in der Bohrung 2 hineinfließt. Dieser Zustand mit sicher verschlossener Bohrung 2 ist in Fig. 2 schematisch dargestellt. Durch diese im wesentlichen formschlüssige Verbindung der Innenwandung der Bohrung 2 und des Stopfens 3 wird die Bohrung 2 abgedichtet und auch die Kraft aufgenommen, die durch das Druckmedium im Inneren des Druckgehäuses 1 resultiert. Die physikalischen Materialeigenschaften und die Geometrie von Nut 4, allfälliger Schulter 5 und Stopfen 3 sind so ausgelegt, dass das Material des Stopfens 3 mit geringsten Kraftaufwand verformt wird.

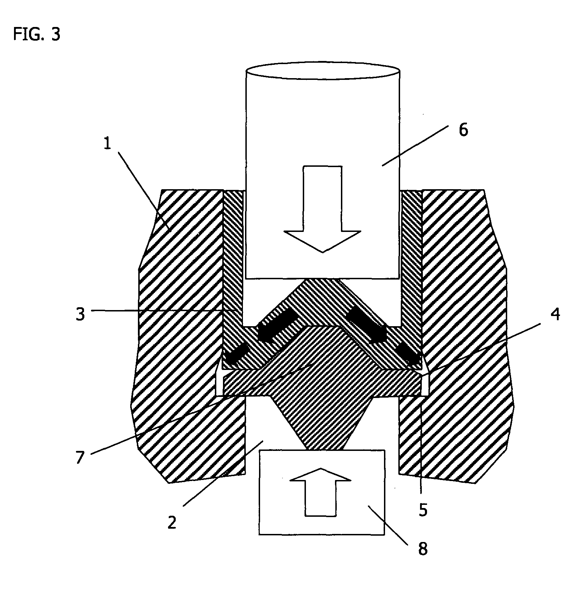

In Fig. 3 ist eine erfindungsgemäße Ausführungsform dargestellt, bei welcher ein im wesentlichen scheibenförmiger Anschlagteil 8 in die Bohrung eingesetzt ist, der einen Anschlag für in der Bohrung befindliche Funktionsteile 8 bildet. Dieser Anschlagteil 8 ist aus härterem Material als der Stopfen 3 und schützt diesen somit vor Beschädigung durch die Funktionsteile 8. Gleichzeitig gibt der Anschlagteil 8 aber durch seine dem Stopfen 3 zugewandte Oberfläche die Fließrichtung für das Material des Stopfens 3 während der Umformung durch das Werkzeug 6 genau definiert vor und gibt somit die gewünschte Geometrie im Haltebereich des Stopfens 3 vor. Auch kann dadurch die Auflagefläche zum Verformen verkleinert werden.

## Patentansprüche

1. Verfahren zum druckdichten Verschließen einer Bohrung in Gehäusen, umfassend das Einlassen eines im wesentlichen büchsenförmigen, einteiligen Stopfens (3) in die Bohrung (2) des Gehäuses (1), wobei ausschließlich der Stopfen (3) mittels eines axialen Werkzeuges (6, 9) plastisch verformt wird, so dass der Stopfen (3) über zumindest einen Teil seiner Länge radial nach außen hin verformt und damit in dichtende Verbindung mit der Innenwandung der Bohrung (2) gebracht wird, wobei vor Einsetzen des Stopfens (3) eine umlaufende Nut (4) und/oder Hinterschneidung in der Bohrung (2) ausgearbeitet wird, und das Material des Stopfens (3) unter dauerhafter Umformung im wesentlichen radial in diese Nut (4) bzw. hinter diese Hinterschneidung gedrückt wird, **dadurch gekennzeichnet,**
**dass** das Werkzeug mittels eines im wesentlichen zylindrischen Abschnittes (6) dergestalt auf den Boden des im wesentlichen büchsenförmigen Stopfens (3) einwirkt, dass Material des Bodens des Stopfens nach vorne und auch radial nach außen in die Nut (4)/Hinterschneidung hin gedrückt wird.

2. Verfahren nach Anspruch 1, **dadurch gekennzeichnet, dass** in der Bohrung (2) eine im wesentlichen schulterartige Querschnittsverengung (5) auf einen geringeren Durchmesser als den Außendurchmesser des Stopfens (3) ausgearbeitet wird, wobei der Stopfen (3) vor seiner radialen Verformung an dieser Querschnittsverengung (5) in Anschlag gebracht wird.

3. Verfahren nach einem der Ansprüche 1 oder 2, **dadurch gekennzeichnet, dass** ein entfernbarer Anschlag für den Stopfen (3) in die Bohrung (2) eingebracht, der Stopfen (3) auf diesen Anschlag aufgesetzt und anschließend mittels des Werkzeuges (6, 9) entlang der dem Stopfen (3) zugewandten Oberfläche des Anschlages auf die Nut (4) bzw. die Hinterschneidung der Bohrung hin verformt wird.

4. Verfahren nach einem der Ansprüche 1 oder 2, **dadurch gekennzeichnet, dass** ein im wesentlichen scheibenförmiger Anschlagteil (7) mit größerer Härte als der Stopfen (3) in die Bohrung (2) eingesetzt und an die Querschnittsverengung (5) angesetzt wird, wonach der Stopfen (3) auf den Anschlagteil (7) angesetzt und ein Teil des Materials des Stopfens (3) entlang der Oberfläche des Anschlagteils (7) im wesentlichen radial in die Nut (4) bzw. hinter die Hinterschneidung gedrückt wird.

5. Verfahren nach einem der Ansprüche 1 bis 4, **dadurch gekennzeichnet, dass** der Stopfen (3) durch Kaltumformung hergestellt wird.

6. Verfahren nach Anspruch 1, **dadurch gekennzeichnet, dass** ein Stopfen (3) mit einem in Richtung des Werkzeugs hin bombierten oder in Form eines Kegels oder Kegelstumpfs ausgebildeten Boden verwendet wird.

7. Druckgehäuse mit zumindest einer Bohrung (2), welche durch einen darin eingesetzten, im wesentlichen büchsenförmigen, einteiligen Stopfen (3) druckdicht verschlossen ist, wobei der Stopfen (3) durch plastische Verformung eine zumindest teilweise formschlüssige Verbindung mit der Innenwandung der Bohrung (2) eingegangen ist, in der Innenwandung der Bohrung (2) gehalten ist, wobei in der Bohrung (2) eine umlaufende Nut (4) und/oder Hinterschneidung vorgesehen ist, in welche Nut (4) der durch Umformung dauerhaft in seiner Form veränderte Stopfen (3) mit einer umlaufenden Auskragung eingreift bzw. welche Hinterschneidung die umlaufende Auskragung des Stopfens (3) hintergreift, **dadurch gekennzeichnet, dass** Material des bombierten oder in Form eines Kegels oder Kegelstumpfs ausgebildeten Bodens des Stopfens nach vorne und auch radial nach außen in die Nut (4) bzw. die Hinterschneidung hinein gedrückt ist.

8. Druckgehäuse nach Anspruch 7, **dadurch gekennzeichnet, dass** der Stopfen (3) an einer im wesentlichen schulterartigen, umlaufenden Querschnittsverengung (5) der Bohrung anliegt.

9. Druckgehäuse nach einem der Ansprüche 7 oder 8, **dadurch gekennzeichnet, dass** der Stopfen (3) aus einem weicheren Material als das Gehäuse (1), zumindest im Bereich der Bohrung (2), besteht.

10. Druckgehäuse nach einem der Ansprüche 7 bis 9, **dadurch gekennzeichnet, dass** der Stopfen (3) aus einem härteren Material als das Gehäuse (1), zumindest im Bereich der Bohrung (2), besteht.

11. Druckgehäuse nach einem der Ansprüche 7 bis 10, **dadurch gekennzeichnet, dass** zusätzlich ein im wesentlichen scheibenförmiger Anschlagteil (7) zwischen dem Stopfen (3) und der schulterartigen Querschnittsverengung (5) vorgesehen ist, wobei der Stopfen (3) an dem Anschlagteil (3) zumindest teilweise anliegt und allein das Material des Stopfens (3) in die in der Bohrung (2) umlaufende Nut (4) eingreift bzw. die Hinterschneidung der Bohrung (2) hintergreift.

12. Druckgehäuse nach einem der Ansprüche 7 bis 11, **dadurch gekennzeichnet, dass** der Stopfen (3) durch Kaltumformung in seine die Bohrung (2) verschließende Form gebracht worden ist.

## Claims

1. A method for sealing a bore in casings in a pressure-tight fashion, comprising the embedding of an essentially socket-shaped, one-piece plug (3) into the bore (2) of the casing (1), wherein only the plug (3) is plastically deformed by means of an axial tool (6, 9) such that the plug (3) is deformed radially outward over at least part of its length and thereby tightly connected to the inner wall of the bore (2), and wherein a circumferential groove (4) and/or undercut is produced in the bore (2) prior to the insertion of the plug (3) and the material of the plug (3) is permanently deformed by essentially being pressed radially into this groove (4) or behind this undercut, **characterized in**
**that** the tool acts upon the bottom of the essentially socket-shaped plug (3) by means of an essentially cylindrical section (6) in such a way that material of the bottom of the plug is pressed into the groove (4)/undercut forward and also radially outward.

2. The method according to Claim 1, **characterized in that** an essentially shoulder-like cross-sectional narrowing (5) to a diameter smaller than the outside diameter of the plug (3) is produced in the bore (2), wherein the plug (3) is placed against this cross-sectional narrowing (5) prior to its radial deformation.

3. The method according to one of Claims 1 or 2, **characterized in that** a removable stop for the plug (3) is inserted into the bore (2), and **in that** the plug (3) is then placed onto this stop and subsequently deformed toward the groove (4) or the undercut of the bore along the surface of the stop facing the plug (3) by means of the tool (6, 9).

4. The method according to one of Claims 1 or 2, **characterized in that** an essentially disk-shaped stopping element (7) of greater hardness than the plug (3) is inserted into the bore (2) and placed against the cross-sectional narrowing (5), wherein the plug (3) is then placed onto the stopping element (7) and part of the material of the plug (3) essentially is pressed radially into the groove (4) or behind the undercut along the surface of the stopping element (7).

5. The method according to one of Claims 1 to 4, **characterized in that** the plug (3) is produced by means of cold forming.

6. The method according to Claim 1, **characterized in that** the plug (3) used has a bottom that is arched in the direction of the tool or realized in the form of a cone or truncated cone.

7. A pressure casing with at least one bore (2) that is sealed in a pressure-tight fashion by means of an essentially socket-shaped, one-piece plug (3) inserted therein, wherein the plug (3) is at least partially connected to the inner wall of the bore (2) in a form-fitting fashion due to plastic deformation and held in the inner wall of the bore (2), and wherein a circumferential groove (4) and/or undercut is provided in the bore (2), into which groove (4) the permanently deformed plug (3) engages with a circumferential projection or behind which undercut the circumferential projection of the plug (3) engages, **characterized in that** material of the bottom of the plug, which is arched or realized in the form of a cone or truncated cone, is pressed into the groove (4) or the undercut forward and also radially outward.

8. The pressure casing according to Claim 7, **characterized in that** the plug (3) rests against an essentially shoulder-like, circumferential cross-sectional narrowing (5) of the bore.

9. The pressure casing according to one of Claims 7 or 8, **characterized in that** the plug (3) consists of a softer material than the casing (1) at least in the region of the bore (2).

10. The pressure casing according to one of Claims 7 to 9, **characterized in that** the plug (3) consists of a harder material than the casing (1) at least in the region of the bore (2).

11. The pressure casing according to one of Claims 7 to 10, **characterized in that** an essentially disk-shaped stopping element (7) is additionally provided between the plug (3) and the shoulder-like cross-sectional narrowing (5), wherein the plug (3) at least partially rests against the stopping element (7) and only the material of the plug (3) engages into the circumferential groove (4) of the bore (2) or behind the undercut of the bore (2).

12. The pressure casing according to one of Claims 7 to 11, **characterized in that** the plug (3) was deformed into its shape, in which it seals the bore (2), by means of cold forming.

## Revendications

1. Procédé destiné à la fermeture étanche à la pression d'un perçage dans des logements, comprenant l'insertion d'un bouchon (3) monobloc essentiellement en forme de douille dans le perçage (2) du logement (1), sachant que seul le bouchon (3) est déformé plastiquement à l'aide d'un outil axial (6, 9), de telle sorte que le bouchon (3) est déformé radialement vers l'extérieur sur au moins une partie de sa longueur et est ainsi amené en liaison étanche avec la paroi intérieure du perçage (2), sachant qu'avant l'insertion du bouchon (3), une rainure (4) et/ou une contre-dépouille circulaire est usinée dans le perçage (2), et le matériau du bouchon (3) est comprimé par une déformation permanente essentiellement radialement dans cette rainure (4), respectivement derrière cette contre-dépouille, **caractérisé en ce que**
l'outil agit de telle sorte sur le fond du bouchon (3) essentiellement en forme de douille, au moyen d'un tronçon (6) essentiellement cylindrique, que du matériau du fond du bouchon est comprimé vers l'avant et aussi radialement vers l'extérieur dans la rainure (4)/ la contre-dépouille.

2. Procédé selon la revendication 1, **caractérisé en ce qu'**un resserrement transversal (5) essentiellement de type épaulement est usiné dans le perçage (2) à un diamètre inférieur au diamètre extérieur du bouchon (3), sachant que le bouchon (3) est amené en butée sur ce resserrement transversal (5) avant sa déformation radiale.

3. Procédé selon la revendication 1 ou 2, **caractérisé en ce qu'**une butée amovible pour le bouchon (3) est intégrée dans le perçage (2), le bouchon (3) est placé sur cette butée, puis est déformé sur la rainure (4), respectivement, la contre-dépouille du perçage au moyen de l'outil (6, 9) le long de la surface de la butée tournée vers le bouchon (3).

4. Procédé selon la revendication 1 ou 2, **caractérisé en ce qu'**une partie de butée (7) essentiellement en forme de disque d'une dureté supérieure au bouchon (3) est insérée dans le perçage (2) et placée sur le resserrement transversal (5), après quoi le bouchon (3) est placé sur la partie de butée (7) et une partie du matériau du bouchon (3) est comprimée essentiellement radialement dans la rainure (4), respectivement, derrière la contre-dépouille le long de la surface de la partie de butée (7).

5. Procédé selon l'une des revendications 1 à 4, **caractérisé en ce que** le bouchon (3) est fabriqué par une déformation à froid.

6. Procédé selon la revendication 1, **caractérisé en ce qu'**un bouchon (3) avec un fond bombé en direction de l'outil ou conique ou tronconique est employé.

7. Logement sous pression comprenant au moins un perçage (2), lequel est fermé en étanchéité à la pression par un bouchon (3) monobloc essentiellement en forme de douille inséré dedans, sachant que le bouchon (3) est relié partiellement en complémentarité de forme par une déformation plastique avec la paroi intérieure du perçage (2), maintenu dans la paroi intérieure du perçage (2), sachant qu'une rainure (4) et/ou une contre-dépouille circulaire est prévue dans le perçage (2), dans laquelle rainure (4) le bouchon (3) à la forme modifiée durablement par déformation se met en prise avec une saillie périphérique, respectivement, dans laquelle contre-dépouille la saillie périphérique du bouchon (3) s'engage par l'arrière, **caractérisé en ce que** du matériau du fond du bouchon bombé ou conique ou tronconique est comprimé dans l'intérieur de la rainure (4), respectivement, la contre-dépouille vers l'avant et aussi radialement vers l'extérieur.

8. Logement sous pression selon la revendication 7, **caractérisé en ce que** le bouchon (3) repose sur un resserrement transversal (5) périphérique essentiellement de type épaulement, du perçage.

9. Logement sous pression selon la revendication 7 ou 8, **caractérisé en ce que** le bouchon (3) est fabriqué dans un matériau plus tendre que le logement (1), au moins au niveau du perçage (2).

10. Logement sous pression selon l'une des revendications 7 à 9, **caractérisé en ce que** le bouchon (3) est fabriqué dans un matériau plus dur que le logement (1), au moins au niveau du perçage (2).

11. Logement sous pression selon l'une des revendications 7 à 10, **caractérisé en ce qu'**en outre, une partie de butée (7) essentiellement en forme de disque est prévue entre le bouchon (3) et le resserrement transversal (5) de type épaulement, sachant que le bouchon (3) repose au moins partiellement sur la partie de butée (7), et seul le matériau du bouchon (3) se met en prise dans la rainure (4) périphérique dans le perçage (2), respectivement, engage par l'arrière la contre-dépouille du perçage (2).

12. Logement sous pression selon l'une des revendications 7 à 11, **caractérisé en ce que** le bouchon (3) est amené dans sa forme fermant le perçage (2) par une déformation à froid.
